# EUROPEAN PATENT SPECIFICATION

(11) **EP 2 866 428 B1**
(45) Date of publication and mention of the grant of the patent: **21.11.2018**
(21) Application number: 12874700.3
(22) Date of filing: 16.04.2012
(51) Int. Cl.: H04M 3/22

(54) **COMMUNICATION CONTROL SYSTEM AND COMMUNICATION CONTROL METHOD**
KOMMUNIKATIONSSTEUERSYSTEM UND KOMMUNIKATIONSSTEUERVERFAHREN
SYSTÈME DE COMMANDE DE COMMUNICATION ET PROCÉDÉ DE COMMANDE DE COMMUNICATION

(43) Date of publication of application: 29.04.2015
(73) Proprietor: Citic Telecom International Holdings Limited, Hong Kong (CN)
(72) Inventor: WONG, Ka Ki, Hong Kong (CN); CHEUNG, Sutton, Hong Kong (CN); CHOW, Chi Wah, Hong Kong (CN); TANG, Cheung Yin, Hong Kong (CN)
(74) Representative: Santarelli
(86) International application number: PCT/CN2012/074066
(87) International publication number: WO 2013/155655

(56) References cited:
- WO-A1-01/69901
- WO-A1-01/69901
- CN-A- 101 945 109
- CN-A- 102 075 639
- CN-A- 102 075 639
- CN-A- 102 196 085
- US-A1- 2011 138 462

## Description

### TECHNICAL FIELD

The present invention relates to communication control system and communication control method, and more specifically, communication control system and communication control method for controlling voice calls to be sent to a voice switching network.

### BACKGROUND

In the commercial voice switching network, particularly in an International Direct Dialing (IDD) wholesale network, the voice calls are from different far end originations which could be totally unknown to the recipient network operator. The recipient network operator usually needs a "call screening" function to control what voice calls can go into their network. Unfortunately, such capability varies for different voice switch vendors. It is not uncommon that a recipient network is having a voice switch with very limited call screening capability and has to accept whatever calls they receive, or it requires very huge amount of manual resource to do the call screening.

There are several shortcomings in the traditional technologies. Firstly, a voice call sender may be sending some voice calls without correct interworking protocol parameters, or sending calls with call types not supported by the recipient network. This may lead to the network resource is wasted in processing some calls traffic the recipient network doesn't want. Secondly, with the advance of the technology particularly Voice over IP (VOIP), someone can easily generate a mass number of unsolicited voice calls to a network. The recipient network operator may only be able to complain one level up to their carrier (which, for example, replays or exchanges traffic). However, in most cases (for example, in the IDD wholesale network environment with anonymous property), the recipient network operator cannot do anything on the true originator.

Although the voice switching technology is now mostly based on digital switching technology, the voice calls are not processed in the "store and forward" nature. It is difficult for a voice switch operator to effectively inspect and reject those unwelcome calls. This is firstly because a voice call is established in real-time basis which provides very limited time for any inspecting program, no matter how powerful the processing system is used. Secondly, even if such inspecting system is available, usually the operator has to specially route the calls to such system for it to inspect every call. This complicates the normal call routing network arrangement and consumes double the call processing capacity of the voice switch.

CN patent applicant publication No. CN1265810A disclosed a method of call screening for the incoming call to a mobile phone. In this method, in the network environment of the mobile phone with GSM standard, the mobile subscriber receiving the call has to unconditionally forward all the incoming calls to one predetermined node in the telephone network, and then at this node, the information concerning the call is compared with predetermined screening criteria, and only the call matched the screening criteria is forwarded back to the mobile phone.

A similar system is for example disclosed in document CN 102 075 639 A.

### SUMMARY OF THE INVENTION

However, the inventor of the present invention has found that according to the method in the CN patent applicant publication No. CN1265810A as described above, the mobile phone has to enable unconditional call forwarding so as to forward the call to the predetermined node for screening. Therefore, the design for the network architecture and call processing procedure may deviate from the standard design and increase difficulty. This will cause inconvenient to the network operator.

Moreover, according to the method in the CN patent applicant publication No. CN1265810A as described above, since the mobile phone terminal is initiatively involved in the method, such method may be intrusive to the user operation and/or function of the mobile phone terminal. For example, if the mobile phone needs to forward the call to the predetermined node for screening, the user cannot forward the call to another desired number via call forwarding. In addition, if the user would like to forward the incoming call of the mobile phone to a fixed-line phone at home, he cannot enjoy the call screening function. This may cause inconvenience to the user.

Moreover, according to the method in the CN patent applicant publication No. CN1265810A as described above, since such method can only be applied to mobile phone network environment with GSM standard, the same method cannot perform call screening between network operator and fixed-line phone network with different standards.

In order to solve at least one of the above technical problems, the inventor of the present invention worked out the present invention.

Specially, the present invention provides a communication control system according to claim 1 and a communication control method according to claim 6.

According to the system and method of the present invention, since the communication node (the switch, the mobile phone terminal, etc.) does not initiatively involved in the whole process, it would not disturb the standard process and function of the communication node.

Further, since the system and method of the present invention does not require the alternation of the internal structure and function of the switch, the present invention would not disturb the arrangement of the existing or standard system router.

Further, since the system and method of the present invention can be applied to switch interconnected by Common Channel No. 7 Signaling (C7), the present invention can be adopted to perform call screening between different network operators, even between mobile phone and fixed-line phone network.

Based on the following description of the drawings, the other features and advantages of the present invention can be more explicit.

### BRIEF DESCRIPTION OF THE DRAWINGS

Figure 1 illustrates a typical interconnection scenario between two IDD switches in traditional Time Division Multiplexing (TDM) connection.
Figure 2 illustrates a schematic deployment diagram of an exemplary communication control system according to one embodiment of the present invention.
Figure 3 illustrates a schematic flowchart of an exemplary communication control system according to one embodiment of the present invention.

### DETAILED DESCRIPTION

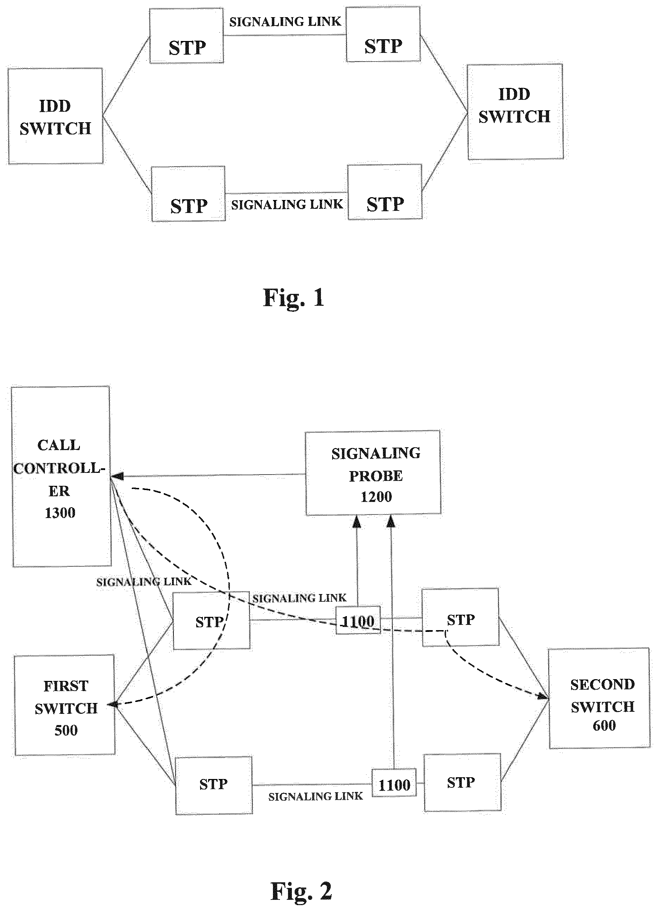

Figure 1 firstly illustrates a typical interconnection scenario between two IDD switches in traditional Time Division Multiplexing (TDM) connection. The connection relations between the elements as shown in the drawings of the present application represent the signal flow between the elements. That is to say, in the present application, "connection" means connecting through communication.

As shown in Fig. 1, the TDM connection involves two parts, namely the signaling links and the voice links. The Signaling links are used for exchanging signaling messages between the two IDD switches. Common Channel No. 7 Signaling (C7) protocol is the most popular signaling protocol used in TDM network, while ISDN User Part Protocol (ISUP) is a popular application protocol for IDD calls. The ISUP protocol messages are carried via 64kpbs timeslots which are called signaling links. This timeslots can be a TDM E1 connection directly between the two IDD switches or they are routed via other equipment called Signaling Transfer Points (STP) for more effective signaling routing and resource arrangement. Here, a Signal Transfer Point (STP) is inter-connection point to both internal equipment and external parties' equipments. STP is also a router that relays SS7 messages between signaling end-points (SEPs) and other signaling transfer points (STPs).

The voice links carry the audio signals, i.e. people's conversations. The signaling links are occupied only during the call setup while the voice channels are occupied during the whole conversation. Therefore the signaling links require much less bandwidth compared to the voice channels. It is common that one or two signaling timeslots are already enough for the traffic between two IDD switches, depending on the traffic profile.

Figure 2 illustrates a schematic deployment diagram of an exemplary communication control system according to one embodiment of the present invention. As shown in Fig. 2, the exemplary communication control system 1000 comprises: signaling tap 1100, configured to extract the signaling message between the first switch 500 and the second switch 600; signaling probe 1200, configured to probe the specific message transmitted by the first switch 500 in the signaling message; and a call controller 1300, configured to determine whether specific parameter in the specific message matches predetermined criteria. When it is determined that the specific parameter matches the predetermined criteria, the call controller 1300 send signaling message for releasing the call to at least one of the first switch 500 and the second switch 600.

According to one embodiment, the above described signaling tap 1100 can be achieved by signal tapping device. Such signal tapping device is commercially available. Said signal tapping device connects the line and the detection device usually via high-impedance elements. Due to the high-impedance elements, the detection device does not affect or be intrusive to the transmitting of the line signal on the signaling link, and thus the signal tapping device is also called "passive" tapping device. For example, the signal tapping device for copper cable disclosed in US patent 5,457,729 can be used as signaling tap 1100 of the present invention. In addition, with respect to optical fiber cable, the optical signal tapping device disclosed in US patent 5,410,628 can be used as signaling tap 1100 of the present invention. Signaling tap 1100 can be used to extract signaling message (such as ISUP message) on the signaling link and send such signaling message to the signaling probe 1200. The signaling probe 1200 is able to detect the specific message in the signaling message extracted by the signaling tap 1100, and obtain specific parameters in the specific message by analysis. The signaling probe 1200 is able to send data to the call controller 1300 so as to achieve data connection. The signaling probe 1200 is also commercially available and also is a passive device that is not intrusive to the signaling links. For example, the detector used in the system for gathering and storing telecommunication data disclosed in US patent No. 7,496,185 can be used as the signaling probe 1200 of the present invention. Call controller 1300 can be realized by application server, which can use different kinds of signaling link so as to connect to the STP as shown in the drawings. However, based on the preference of the operator or the specific application environment, the call controller 1300 can connect with the switch 500 and/or 600 of the operator directly, rather than through the STP. The call controller 1300 may comprise inspecting logic for determining whether the specific parameter in the specific message matches the predetermined criteria.

The above described communication control system 1000 can be locate outside the first switch 500, and outside the second switch 600. Therefore, there is no need to change the internal structure and function of the switch and thus the arrangement of the existing or standard system router will not be disturbed.

Furthermore, when the signaling tap 1100 and the signaling probe 1200 perform operations, the call setup process between the first switch 500 and the second switch 600 is carried out normally independent from said operations, and is not disturbed. Therefore, the present invention does not disturb the standard operations and functions of the existing communication node.

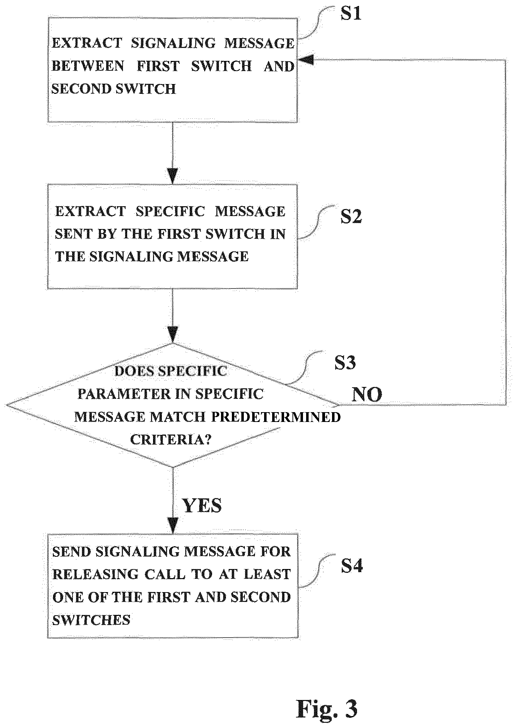

Below, the operation flow of the present invention is described with the flowchart in Fig. 3.

Figure 3 illustrates a schematic flowchart of an exemplary communication control system according to one embodiment of the present invention.

In Step S1, the signaling tap 1100 extracts the signaling messages between the first switch 500 and the second switch 600. During this, the call setup process continues without knowing the data are being tapped. That is to say, for the two switches 500 and 600, the signaling tap 1100 can be "transparent". According to one exemplary embodiment, the signaling tap 1100 can extract all the C7 messages and send the extracted C7 message to the signaling probes 1200.

In Step S2, the signaling probe 1200 extract the specific message sent by the first switch (originating switch) 500 from the signaling message extracted by the signaling tap 1100. Such specific message can be an initial message requesting call setup with the second switch 600 by the first switch 500. According to one exemplary embodiment, the specific message can be "IAM (Initial Address Message, the first message from the originating switch for call setup)" message in the ISUP messages, and the IAM message is transmitted to the call controller 1300.

In Step S3, the inspecting logic of the call controller 1300 determines whether the specific parameter in the specific message matches the predetermined criteria. If it is determined that the specific parameter matches the predetermined criteria, then the process proceeds to Step S4.

According to one exemplary embodiment, in Step S3, the inspecting logic application of the call controller 1300 can extract the content in the IAM message, inspect the key parameters such as OPC (C7 Point Codes of the Switch originating this message), the DPC (the C7 Point Code of the Switch receiving this message), the calling number, the called number, CIC (Circuit Identification Code that identifies which channel is used for the voice call) and other applicable parameters required for the call control, and inspect the parameters such as call types, calling and called numbers, so as to make determination with the predetermined criteria. The predetermined criteria are criteria for determining whether a call is a malicious call. For example, the predetermined criteria are that the calling number matches certain criteria (for examiner, matches a certain black list), that the calling time matches certain criteria (for examiner, from 1:00 am to 6:00 am), or the combination of several criteria. The above mentioned inspecting logic can be a static block list, or some dynamic pattern received from an external system that detects malicious calls. For example, the inspecting logic can update the predetermined criteria for inspecting with the gathered new information in real time (for example, adding calling numbers to a black list).

In Step S4, the call controller 1300 send signaling message for releasing the call to at least one of the first switch 500 and the second switch 600.

According to one exemplary embodiment, the call controller 1300 may compose a Release message (the REL message in ISUP protocol) by pretending that the second switch 600 (the destination switch) is now trying to release the call. In order to pretend to be the second switch 600, the call controller 1300 can use the following key parameters: the Switch Point code (for example, which is used as the OPC of the REL message in the ISUP protocol) of the second switch (Destination switch), the Switch Point code (for example, which is used as the DPC of the REL message in the ISUP protocol) of the first switch (originating switch), and the Circuit Identification Code from the Initial Address Message (for example, CIC of the IAM in the ISUP protocol). The REL message is sent out from the call controller 1300, to the first switch 500 which is the originating switch. The application in the call controller 1300 may write event log for records or Charging Records, for handling the client's inquiry and using in the reconciliation with the operator.

According to one exemplary embodiment, if it is determined that the criteria are not matched in Step S3, the application in the call controller 1300 just does nothing, and returns to Step S3 and inspects the next message.

Then, when the first switch 500 which is the originating switch receives the signaling message for releasing the call from the call controller 1300, it thinks that this signaling message for releasing the call is the message from the second switch (destination switch) 600, and thus it would end the call, and send another signaling message for releasing the call to the second switch 600. Then, the call is terminated.

Please note that, although the above detailed description described that the Release message is sent to the first switch 500 which is the originating switch, this is just one exemplary example of the present invention. The Release message can also be sent to the second switch 600 which is the destination switch. More specifically, the call controller 1300 may composes a Release message (the REL message in ISUP protocol) by pretending that the first switch 500 (the originating switch) is now trying to release the call. In order to pretend to be the first switch 500, the call controller 1300 can uses the following key parameters: the Switch Point code (for example, which is used as the OPC of the REL message in the ISUP protocol) of the first switch (originating switch), the Switch Point code (for example, which is used as the DPC of the REL message in the ISUP protocol) of the second switch (Destination switch), and the Circuit Identification Code from the Initial Address Message (for example, CIC of the IAM in the ISUP protocol). The Release message is sent out from the call controller 1300, to the second switch 600 which is the destination switch.

The Steps S1, S2 and S3 as shown in Fig. 3 proceed sequentially, but this flowchart merely schematically shows the signal processing flow for one signaling. That is to say, for one signaling, such signaling is firstly extracted, and then analyzed so as to extract the specific message in this signaling, and the specific message is used to be compared with the predetermined criteria. However, in practice, the signaling tap 1100, the signaling probe 1200 and the call controller 1300 can process a plurality of signaling in parallel. More specifically, the signaling tap 1100 can be configured to continually extract signaling and send the extracted signaling to the signaling probe 1200, no matter what processes the signaling probe 1200 and the call controller 1300 are performing. The signaling probe 1200 can be configured to continually receive and analyze the signaling from the signaling tap 1100, and send the analyzed and extracted specific message to the call controller 1300, no matter what processes the signaling tab 1100 and the call controller 1300 are performing. Similarly, the call controller 1300 can be configured to continually receive the specific message from the signaling probe 1200, and make determination with respect to the specific message so as to perform control, no matter what processes the signaling tab 1100 and the signaling probe 1200 are performing. For example, when the signaling probe 1200 performs analysis on one signaling, the signaling tab 1100 may perform the extraction of another signaling. In addition, it is possible that: when the signaling tab 1100 extracts three signaling, the signaling probe 1200 only analyzes one signaling of them due to some reasons. That is to say, the processes of the signaling tap 1100, the signaling probe 1200 and the call controller 1300 may be unsynchronized.

The detection system of the present invention is a non-intrusive detection system. According to the solution of the present invention, it does not require significant network routing change but can still tear down the malicious calls. As the present invention looks only at the signaling messages, the capacity dimensioning of the design of the present invention is much easier and cost effective.

The method and device of the present invention can be implemented in various ways. For example, the method and device of the present invention can be implemented by software, hardware, firmware, or any of the combinations thereof. The above described order of the steps of the methods of the present invention is just illustrative, and the steps of the methods of the present invention is not limited to be carried out in the described specific order, unless explicitly stated in other way. In addition, in some embodiments, the present invention can be implemented as program stored in recording medium which comprises machine readable instructions for implementing the method according to the present invention. Therefore, the present invention further covers recording medium which stores instructions for implementing the method according to the present invention.

Although some specific embodiments are illustrated in detail by examples, the skilled artisan should understand that the above examples are just illustrative and shall not limit the scope of the present invention. The skilled artisan should understand that the embodiments can be amended without deviating from the scope and the core of the present application. The scope of the present invention is defined by the attached claims.

For example, in the description of the present disclosure, the embodiments of the present invention are described with IDD switch as example. However, the present invention is not limited to IDD switch. The present invention can be adapted to any switch, as long as the signaling protocol used by this switch comprises message for establishing call and message for releasing call by the originating switch. For example, the present invention can be adapted to switches such as Mobile Switching Center (MSC).

In addition, in the present disclosure, the present invention is described with the switch using C7 protocol and signaling message of ISUP protocol as examples. However, the present invention is not limited to the switch using C7 protocol and signaling message of ISUP protocol. The present invention can also be applied to other communication protocol, as long as the communication protocol comprises, transmitted on the signaling link, signaling message of the caller switch for establishing the communication and the signaling message of the communication party for releasing the call.

## Claims

1. A communication control system, comprising:
a signaling tap (1100), configured to extract signaling message between a first switch (500) and a second switch (600);
a signaling probe (1200), configured to probe specific message transmitted by the first switch (500) in the signaling message; and
a call controller (1300), configured to determine whether specific parameters in the specific message match predetermined criteria;
wherein the call controller (1300) sends signaling message for releasing the call to at least one of the first switch (500) and the second switch (600) when it is determined that the specific parameters match the predetermined criteria,
in the case that the signaling message for releasing the call is the signaling message sent to the first switch (500), at least one of the signaling parameters of the signaling message for releasing the call is the signaling parameter used by the second switch (600), such that the first switch (500) is capable of identifying the signaling message for releasing the call as signaling message from the second switch (600),
in the case that the signaling message for releasing the call is the signaling message sent to the second switch (600), at least one of the signaling parameters of the signaling message for releasing the call is the signaling parameter used by the first switch (500), such that the second switch (600) is capable of identifying the signaling message for releasing the call as signaling message from the first switch (500).

2. The communication control system according to claim 1, wherein the specific message is an initial message requesting call setup with the second switch (600) by the first switch (500).

3. The communication control system according to claim 1, wherein the predetermined criteria are criteria for determining whether a call is a malicious call.

4. The communication control system according to claim 1, wherein the communication control system is located outside the first switch (500), and the communication control system is located outside the second switch (600).

5. The communication control system according to claim 1, wherein when the signaling tap (1100) and the signaling probe (1200) perform operations, the call setup process between the first switch (500) and the second switch (600) is carried out independent from said operations, and is not disturbed.

6. A communication control method, comprising:
signaling tapping step (S1), for extracting signaling message between a first switch (500) and a second switch (600);
signaling probing step (S2), for probing specific message transmitted by the first switch (500) in the signaling message; and
determination step (S3), for determining whether specific parameters in the specific message match predetermined criteria; and
call releasing step (S4), for sending signaling message for releasing the call to at least one of the first switch (500) and the second switch (600) when it is determined that the specific parameters match the predetermined criteria,
in the case that the signaling message for releasing the call is the signaling message sent to the first switch (500), at least one of the signaling parameters of the signaling message for releasing the call is the signaling parameter used by the second switch (600), such that the first switch (500) is capable of identifying the signaling message for releasing the call as signaling message from the second switch (600),
in the case that the signaling message for releasing the call is the signaling message sent to the second switch (600), at least one of the signaling parameters of the signaling message for releasing the call is the signaling parameter used by the first switch (500), such that the second switch (600) is capable of identifying the signaling message for releasing the call as signaling message from the first switch (500).

7. The communication control method according to claim 6, wherein the specific message is an initial message requesting call setup with the second switch (600) by the first switch (500).

8. The communication control method according to claim 6, wherein the predetermined criteria are criteria for determining whether a call is a malicious call.

9. The communication control method according to claim 6, wherein when the signaling tap (1100) and the signaling probe (1200) perform operations, the call setup process between the first switch (500) and the second switch (600) is carried out independent from said operations, and is not disturbed.

## Patentansprüche

1. Kommunikationssteuerungssystem, das umfasst:
einen Signalübertragungsabgriff (1100), der ausgestaltet ist, um eine Signalübertragungsnachricht zwischen einem ersten Switch (500) und einem zweiten Switch (600) zu extrahieren;
eine Signalübertragungsmesssonde (1200), die ausgestaltet ist, um eine spezielle Nachricht, die von dem ersten Switch (500) in der Signalübertragungsnachricht übertragen wurde, zu untersuchen; und
ein Anrufsteuergerät (1300), das ausgestaltet ist, um festzustellen, ob spezielle Parameter in der speziellen Nachricht mit vorbestimmten Kriterien übereinstimmen;
wobei das Anrufsteuergerät (1300) eine Signalübertragungsnachricht zum Freigeben des Anrufs an den ersten Switch (500) und/oder den zweiten Switch (600) sendet, wenn festgestellt wird, dass die speziellen Parameter mit den vorbestimmten Kriterien übereinstimmen,
wobei im Fall, dass die Signalübertragungsnachricht zum Freigeben des Anrufs die an den ersten Switch (500) gesendete Signalübertragungsnachricht ist, mindestens einer der Signalübertragungsparameter der Signalübertragungsnachricht zum Freigeben des Anrufs derjenige Signalübertragungsparameter ist, der von dem zweiten Switch (600) verwendet wird, so dass der erste Switch (500) in der Lage ist, die Signalübertragungsnachricht zum Freigeben des Anrufs als Signalübertragungsnachricht von dem zweiten Switch (600) zu erkennen,
wobei im Fall, dass die Signalübertragungsnachricht zum Freigeben des Anrufs die an den zweiten Switch (600) gesendete Signalübertragungsnachricht ist, mindestens einer der Signalübertragungsparameter der Signalübertragungsnachricht zum Freigeben des Anrufs derjenige Signalübertragungsparameter ist, der von dem ersten Switch (500) verwendet wird, so dass der zweite Switch (600) in der Lage ist, die Signalübertragungsnachricht zum Freigeben des Anrufs als Signalübertragungsnachricht von dem ersten Switch (500) zu erkennen.

2. Kommunikationssteuerungssystem nach Anspruch 1,
wobei die spezielle Nachricht eine Anfangsnachricht ist, die das Einrichten von Anrufen bei dem zweiten Switch (600) durch den ersten Switch (500) anfordert.

3. Kommunikationssteuerungssystem nach Anspruch 1,
wobei die vorbestimmten Kriterien Kriterien sind, um festzustellen, ob ein Anruf ein schädlicher Anruf ist.

4. Kommunikationssteuerungssystem nach Anspruch 1,
wobei sich das Kommunikationssteuerungssystem außerhalb des ersten Switches (500) befindet und sich das Kommunikationssteuerungssystem außerhalb des zweiten Switches (600) befindet.

5. Kommunikationssteuerungssystem nach Anspruch 1,
wobei, wenn der Signalübertragungsabgriff (1100) und die Signalübertragungsmesssonde (1200) Operationen ausführen, der Prozess zum Einrichten von Anrufen zwischen dem ersten Switch (500) und dem zweiten Switch (600) unabhängig von diesen Operationen ausgeführt wird und nicht gestört wird.

6. Kommunikationssteuerungsverfahren, das umfasst:
einen Schritt (S1) zum Signalübertragungsabgriff, um eine Signalübertragungsnachricht zwischen einem ersten Switch (500) und einem zweiten Switch (600) zu extrahieren;
einen Schritt (S2) zum Untersuchen einer Signalübertragung, um eine spezielle Nachricht zu untersuchen, die in der Signalübertragungsnachricht durch den ersten Switch (500) übertragen wurde; und
einen Feststellungsschritt (S3) zum Feststellen, ob spezielle Parameter in der speziellen Nachricht mit vorbestimmten Kriterien übereinstimmen; und
einen Anruffreigabeschritt (S4) zum Senden einer Signalübertragungsnachricht zum Freigeben des Anrufs an den ersten Switch (500) und/oder den zweiten Switch (600), wenn festgestellt wird, dass die speziellen Parameter mit den vorbestimmten Kriterien übereinstimmen,
wobei im Fall, dass die Signalübertragungsnachricht zum Freigeben des Anrufs die an den ersten Switch (500) gesendete Signalübertragungsnachricht ist, mindestens einer der Signalübertragungsparameter der Signalübertragungsnachricht zum Freigeben des Anrufs derjenige Signalübertragungsparameter ist, der von dem zweiten Switch (600) verwendet wird, so dass der erste Switch (500) in der Lage ist, die Signalübertragungsnachricht zum Freigeben des Anrufs als Signalübertragungsnachricht von dem zweiten Switch (600) zu erkennen,
wobei im Fall, dass die Signalübertragungsnachricht zum Freigeben des Anrufs die an den zweiten Switch (600) gesendete Signalübertragungsnachricht ist, mindestens einer der Signalübertragungsparameter der Signalübertragungsnachricht zum Freigeben des Anrufs derjenige Signalübertragungsparameter ist, der von dem ersten Switch (500) verwendet wird, so dass der zweite Switch (600) in der Lage ist, die Signalübertragungsnachricht zum Freigeben des Anrufs als Signalübertragungsnachricht von dem ersten Switch (500) zu erkennen.

7. Kommunikationssteuerungsverfahren nach Anspruch 6,
wobei die spezielle Nachricht eine Anfangsnachricht ist, die das Einrichten von Anrufen bei dem zweiten Switch (600) durch den ersten Switch (500) anfordert.

8. Kommunikationssteuerungsverfahren nach Anspruch 6,
wobei die vorbestimmten Kriterien Kriterien sind, um festzustellen, ob ein Anruf ein schädlicher Anruf ist.

9. Kommunikationssteuerungsverfahren nach Anspruch 6,
wobei, wenn der Signalübertragungsabgriff (1100) und die Signalübertragungsmesssonde (1200) Operationen ausführen, der Prozess zum Einrichten von Anrufen zwischen dem ersten Switch (500) und dem zweiten Switch (600) unabhängig von diesen Operationen ausgeführt wird und nicht gestört wird.

## Revendications

1. Système de commande de communication comprenant :
une prise de signalisation (1100), configurée pour extraire un message de signalisation entre un premier commutateur (500) et un deuxième commutateur (600) ;
une sonde de signalisation (1200), configurée pour sonder un message spécifique transmis par le premier commutateur (500) dans le message de signalisation ; et
un contrôleur d'appel (1300), configuré pour déterminer si des paramètres spécifiques dans le message spécifique correspondent à des critères prédéterminés ;
dans lequel le contrôleur d'appel (1300) envoie un message de signalisation pour libérer l'appel à au moins l'un du premier commutateur (500) et du deuxième commutateur (600) lorsqu'il est déterminé que les paramètres spécifiques correspondent aux critères prédéterminés,
dans le cas où le message de signalisation pour libérer l'appel est le message de signalisation envoyé au premier commutateur (500), au moins l'un des paramètres de signalisation du message de signalisation pour libérer l'appel est le paramètre de signalisation utilisé par le deuxième commutateur (600), de sorte que le premier commutateur (500) soit capable d'identifier le message de signalisation pour libérer l'appel en tant que message de signalisation du deuxième commutateur (600),
dans le cas où le message de signalisation pour libérer l'appel est le message de signalisation envoyé au deuxième commutateur (600), au moins l'un des paramètres de signalisation du message de signalisation pour libérer l'appel est le paramètre de signalisation utilisé par le premier commutateur (500), de sorte que le deuxième commutateur (600) soit capable d'identifier le message de signalisation pour libérer l'appel en tant que message de signalisation du premier commutateur (500).

2. Système de commande de communication selon la revendication 1, dans lequel le message spécifique est un message initial demandant un établissement d'appel avec le deuxième commutateur (600) par le premier commutateur (500) .

3. Système de commande de communication selon la revendication 1, dans lequel les critères prédéterminés sont des critères pour déterminer si un appel est un appel malveillant.

4. Système de commande de communication selon la revendication 1, où le système de commande de communication est situé à l'extérieur du premier commutateur (500), et le système de commande de communication est situé à l'extérieur du deuxième commutateur (600).

5. Système de commande de communication selon la revendication 1, dans lequel, lorsque la prise de signalisation (1100) et la sonde de signalisation (1200) effectuent des opérations, le processus d'établissement d'appel entre le premier commutateur (500) et le deuxième commutateur (600) est mis en oeuvre indépendamment desdites opérations, et n'est pas perturbé.

6. Procédé de commande de communication comprenant :
une étape de prise de signalisation (S1), pour extraire un message de signalisation entre un premier commutateur (500) et un deuxième commutateur (600) ;
une étape de sondage de signalisation (S2), pour sonder un message spécifique transmis par le premier commutateur (500) dans le message de signalisation ; et
une étape de détermination (S3) pour déterminer si des paramètres spécifiques dans le message spécifique correspondent à des critères prédéterminés ; et
une étape de libération d'appel (S4), pour envoyer un message de signalisation afin de libérer l'appel à au moins l'un du premier commutateur (500) et du deuxième commutateur (600) lorsqu'il est déterminé que les paramètres spécifiques correspondent aux critères prédéterminés,
dans le cas où le message de signalisation pour libérer l'appel est le message de signalisation envoyé au premier commutateur (500), au moins l'un des paramètres de signalisation du message de signalisation pour libérer l'appel est le paramètre de signalisation utilisé par le deuxième commutateur (600), de sorte que le premier commutateur (500) soit capable d'identifier le message de signalisation pour libérer l'appel en tant que message de signalisation du deuxième commutateur (600),
dans le cas où le message de signalisation pour libérer l'appel est le message de signalisation envoyé au deuxième commutateur (600), au moins l'un des paramètres de signalisation du message de signalisation pour libérer l'appel est le paramètre de signalisation utilisé par le premier commutateur (500), de sorte que le deuxième commutateur (600) soit capable d'identifier le message de signalisation pour libérer l'appel en tant que message de signalisation du premier commutateur (500).

7. Procédé de commande de communication selon la revendication 6, dans lequel le message spécifique est un message initial demandant un établissement d'appel avec le deuxième commutateur (600) par le premier commutateur (500) .

8. Procédé de commande de communication selon la revendication 6, dans lequel les critères prédéterminés sont des critères pour déterminer si un appel est un appel malveillant.

9. Procédé de commande de communication selon la revendication 6, dans lequel, lorsque la prise de signalisation (1100) et la sonde de signalisation (1200) effectuent des opérations, le processus d'établissement d'appel entre le premier commutateur (500) et le deuxième commutateur (600) est mis en oeuvre indépendamment desdites opérations, et n'est pas perturbé.
